(19) Europäisches Patentamt
European Patent Office
Office européen des brevets

(11) **EP 2 626 187 A1**

(12) **EUROPEAN PATENT APPLICATION**
published in accordance with Art. 153(4) EPC

(43) Date of publication:
**14.08.2013 Bulletin 2013/33**

(51) Int Cl.:
***B29C 47/88*** (2006.01)     ***B29C 47/14*** (2006.01)
***B29L 7/00*** (2006.01)

(21) Application number: **11830492.2**

(22) Date of filing: **15.09.2011**

(86) International application number:
**PCT/JP2011/071116**

(87) International publication number:
**WO 2012/046559 (12.04.2012 Gazette 2012/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2010 JP 2010226767**

(71) Applicant: **Toyo Kohan Co., Ltd.**
**Tokyo 102-8447 (JP)**

(72) Inventors:
• **FUJII Tadashi**
**Tokyo 102-8447 (JP)**
• **NAKAMURA Takuji**
**Kudamatsu-shi**
**Yamaguchi 744-8611 (JP)**
• **INAZAWA Hiroshi**
**Kudamatsu-shi**
**Yamaguchi 744-8611 (JP)**
• **FURUTAKA Takeshi**
**Kudamatsu-shi**
**Yamaguchi 744-8611 (JP)**
• **FUJII Kentarou**
**Kudamatsu-shi**
**Yamaguchi 744-8611 (JP)**

(74) Representative: **Gleiss, Alf-Olav**
**Gleiss Große Schrell & Partner**
**Patentanwälte Rechtsanwälte**
**Leitzstraße 45**
**D-70469 Stuttgart (DE)**

(54) **FILM PRODUCTION DEVICE AND PRODUCTION METHOD**

(57) Provided are a film production apparatus and a method for producing film capable of exerting a good effect of suppressing necking-in and suppressing film wobbling, and further exerting a good effect of suppressing build-up having a trade-off relationship with the suppression of necking-in. A film production apparatus 10 is configured to take up molten resin fl extruded downward from an exit 1a bored at a lower end face 1b of a die 1 by a rotating chill roll 3 located below the exit 1a and to cool the molten resin fl for solidification by the chill roll 3 to produce film FL, and the film production apparatus further includes: a fluid chamber 5 that provides fluid fd to a space K between the exit 1a and the chill roll 3, the fluid chamber 5 having a counter face facing the space K and the chill roll 3, and the fluid fd provided from the fluid chamber 5 flows through a fluid channel along the counter face toward the die 1 while applying a fluid pressure p in a direction pushing back the molten resin fl existing in the space K against displacement of the molten resin taken up in a rotational direction of the chill roll 3.

Fig. 3

**Description**

TECHNICAL FIELD

The present invention relates to a film production apparatus to produce film by extruding molten resin through a die while taking up the molten resin by a chill roll and to a production method.

BACKGROUND ART

It is generally known that molten resin extruded from an exit of a die or a mold undergoes elongational flow deformation in a space (air gap) before coming into contact with a chill roll located below so that a shape thereof is formed on a free surface. During this elongational flow deformation, the molten resin frequently shows the behavior called necking-in to reduce its width.

Since this necking-in makes the film relatively thicker at the edges than at the central part, such relatively thick areas on both ends of the film are trimmed for removal after casting, and the film then is rewound as a final product. As a result, the width of the film having large degree of necking-in will be narrow inevitably, and so the amount of resin to be trimmed for removal increases, thus increasing the amount of wasted raw material resin and becoming a factor of degrading the usage efficiency of the resin.

The following describes this necking-in of molten resin in more details. This necking-in occurs before the molten resin extruded from the die exit comes into contact with the chill roll and the resin is cooled for solidification. Strictly speaking, the occurrence of this necking-in results from a difference in flow form of the molten resin as follows.

That is, molten resin flows at a central part (the part as a product) of the film with a fixed width in the form of planar elongation flow so that a force acts not only in the longitudinal direction but also in the width direction.

On the other hand, the resin flows at both ends of the film in the form of uniaxial elongational flow where the resin shrinks freely, and additionally receiving a force from the flow in the width direction of the planar elongational flow of the film central part, necking-in occurs. This necking-in generates a distribution in thickness in the width direction of the film and the film shrinks freely at both ends, so that the both ends become thick partially.

Further at boundary between the uniaxial elongational flow at the both ends and the planar elongational flow at the central part, the both ends of the film receive pressure from these flows and may become thinner.

Film obtained by the conventional film production method will have a width dimension as the maximum product width subjected to trimming for removal at such uneven parts in thickness of the both ends of the film, and so the film has a problem of poor usage efficiency of the resin as stated above. Note here that the amount of this necking-in tends to increase with the duration when the molten resin is in an unconstrained state after the die exit and before a contact with the chill roll, and that amount tends to increase until the completion of solidification on the chill roll.

In this way, the necking-in may be decreased by shortening the spatial distance between the die exit and the chill roll, i.e., the length of the air gap. However, considering the tip end shape of the die exit and the arrangement of the chill roll, for example, there is a geometric limit to shorten the spatial distance.

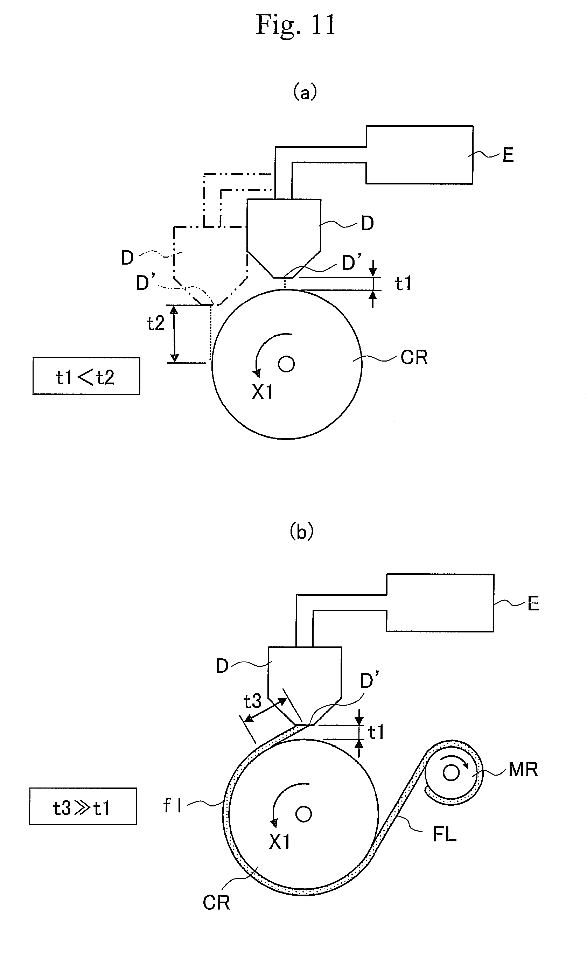

Then as illustrated in Fig. 11a, an exit D' of a die D leading to an extruder E is located above the apex of a chill roll CR, whereby the spatial distance: t1 between the exit D' and the chill roll CR can be shortened. That is, the spatial distance: t1 is shorter than the spatial distance: t2 in another arrangement of the die D as indicated with the chain double-dashed line in the drawing.

For the film forming, however, as illustrated in Fig. 11b, the molten resin is taken up in the rotational direction (X1 direction) of the chill roll CR, and in other words, the molten resin is taken up in a direction inclined toward the rotational direction from the vertically downward by a tensile force trying to take up the resin in the tangential direction of the chill roll CR, and therefore the actual length of the molten resin in the air gap (spatial length: t3) becomes significantly longer than the aforementioned spatial length: t1. Further, such tension acting on the molten resin in the slanting direction increases a tendency of build-up (resin adherence) to adhere to the die exit, or streaky deficiencies occur on the surface of the film, thus causing a quality issue. Setting the t1 still shorter, then the resin will become closer to the form of being taken up in the direction orthogonal to the vertical downward. In that case, however, the swelling molten resin will come into contact with the die exit, causing a problem of a failure in the film production. In this drawing, film FL obtained by cooling the molten resin fl for solidification will be rewound around a wind-up roll MR.

Meanwhile, in order to minimize the above-mentioned build-up, the die exit may be arranged with reference to the chill roll as indicated with the chain double-dashed line of Fig. 11a. That is, in this arrangement, since the die exit D' is located on the tangential line of the chill roll CR, the molten resin extruded from the exit D' vertically downward will come into contact with the surface of the rotating chill roll CR in the tangential direction and will be taken up while being elongated vertically downward, and therefore the build-up adhered to the exit D' of the die can be minimized.

In the arrangement form indicated with the chain double-dashed line of Fig. 11a, however, the molten resin in the air gap will be lengthened due to geometric constraints or the like, and so such an arrangement cannot be always preferable to suppress the necking-in.

In this way, the positional relationship between the chill roll and the die, especially the exit of the die, in the current film production apparatus has a trade-off relationship between suppression in necking-in and prevention of build-up, and therefore they are currently arranged not to cope with both of the problems perfectly but to cope with both of the problems to some extent. For instance, the die exit is arranged at an appropriate position between the solid lines and the chain double-dashed lines in Fig. 11 a.

Meanwhile, as a technique of suppressing such necking-in, Patent Document 1 discloses a technique of pressing molten resin in contact with a chill roll at both ends using an air nozzle, constraining the both ends against the surface of the chill roll using Coulomb force by electrical static charge or using both of them.

Such a technique, however, suppresses necking-in after molten resin comes into contact with the chill roll, and therefore a good effect of suppressing necking-in is hardly expected actually, and the effect of suppressing necking-in is significantly inferior to that obtained from the case where the spatial distance between the die exit and the chill roll is minimized as stated above.

Further when the rolled surface of the molten resin in contact with the chill roll that is to be cooled for solidification is uneven, the formed film will generate local distortion, a variation in amount of elongation and a distribution in thickness, and moreover the orientation distribution of the resin also deteriorates. The film may further generate unevenness in appearance, resulting from a variation in surface roughness of the rolled surface called air irregularities. These problems can be solved by increasing the adhesion between the molten resin and the chill roll to make the properties of the film uniform, including the thickness distribution and the like.

As for the increase of adhesion between the molten resin and the chill roll, Patent Document 2 discloses a technique of increasing the adhesion between them by using electrical static charge. This technique uses a wire electrode to apply the electrical static charge, and when the electrode is provided in the vicinity of the die exit, discharge will occur toward the die, and so a good effect of shortening air gap cannot be expected. That is, this technique can change a path of the molten resin from the die exit to a contact with the chill roll, but requires a space to prevent discharge to other devices, resulting in the difficulty in shortening of the air gap. As methods of securing the adhesion, the distance between the molten resin and the electrode may be narrowed, or a voltage may be increased. In the case of these methods implemented, a discharge crater may be left in the film, and there is a problem of difficulty in setting an operational condition as well. Further, this technique is based on the assumption that an electrifiable resin has to be used to form the film, and there is another problem of significantly limiting the types of resins that can be used.

Patent Document 3 discloses another technique of increasing the adhesion between the molten resin and the chill roll by using air pressure. More specifically, air dynamic pressure is allowed to directly collide with the resin using an air nozzle. Such direct collision of the air dynamic pressure with the resin increases the amount of leakage of air to the mold side, causing vibration of the molten resin called film wobbling or forcing extremely difficult operational adjustment to obtain uniform film as a whole using a cooled mold.

Further as disclosed by Patent Document 4, there is still another technique of preventing trapping of air between the molten resin and the chill roll using a suction chamber forming a negative pressure therein, thus securing adhesion between them.

Patent Documents 5 and 6 further disclose a technique of using an air chamber. However, these techniques are targeted to prevent the leakage of air to the mold side to avoid the film wobbling, and not to form an air layer to the mold side positively. Moreover these air chambers increase their effects as the pressure therein increases. However actually the amount of air leaking to the mold side will increase with the pressure, which becomes a factor of film wobbling of the molten resin in the air gap and limits the pressurization condition in the chamber. In this technique, gap between the air chamber and the chill roll on the die side has to be set at the thickness or more at thick both ends called ear parts due to necking-in, and a large amount of unstable air will leak through this large gap to the die exit side, which becomes a factor of film wobbling. Accordingly, the chamber main body has to be installed away from the die, resulting in an increase of the length of the molten resin until the molten resin comes into contact with the chill roll.

As stated above, it has been desired in the technical field to develop a technique capable of exerting a good effect of preventing necking-in by minimizing the length (spatial distance) of the molten resin after extrusion through the die exit and before a contact with the surface of the chill roll, while effectively suppressing film wobbling, and further capable of suppressing build-up having a trade-off relationship with the suppression of the necking-in.

It has been also desired to develop a technique capable of producing film with uniform overall film properties including thickness distribution by securing good adhesion between the molten resin and the chill roll and performing the cooling for solidification quickly.

Patent Document 1: JP Patent Publication (Kokai) No. 2006-27133
Patent Document 2: JP Patent Publication (Kokai) No. 11-58498(1999)
Patent Document 3: JP Patent Publication (Kokoku) No. 41-19706(1966)
Patent Document 4: JP Patent Publication (Kokai) No. 2002-178389

Patent Document 5: JP Patent Publication (Kokai) No. 8-258117(1996)
Patent Document 6: JP Patent Publication (Kokai) No. 2000-254958

DISCLOSURE OF THE INVENTION

PROBLEM TO BE SOLVED BY THE INVENTION

In view of the aforementioned problems, it is an object of the invention to provide a film production apparatus and a method for producing film capable of exerting a good effect of preventing necking-in and preventing film wobbling, and further exerting a good effect of suppressing build-up having a trade-off relationship with the suppression of necking-in.

MEANS FOR SOLVING THE PROBLEM

In order to fulfill the aforementioned object, a film production apparatus of the present invention is configured to take up molten resin extruded downward from an exit bored at a lower end face of a die by a rotating chill roll located below the exit and to cool the molten resin for solidification by the chill roll to produce film. The film production apparatus further includes a fluid chamber that provides fluid to a space between the exit and the chill roll located below, the fluid chamber having a counter face facing the space and the chill roll, wherein the fluid provided from the fluid chamber flows through a fluid channel along the counter face while applying a fluid pressure in a direction pushing back the molten resin existing in the space against displacement of the molten resin taken up in a rotational direction of the chill roll.
The production apparatus of the present invention includes a fluid chamber to provide fluid such as pressure air in a space (air gap) between the die exit and the chill roll located below, and is configured to push back the molten resin, which is extruded from the exit, comes into contact with the rotating chill roll and is about to deform in a slanting direction, for example, by being pulled in the rotational direction of the chill roll, using the pressure of the fluid provided in the space, thus keeping the posture of the molten resin in the space, especially in the vicinity of the die exit, to be elongated as vertically downward as possible from the die exit, thereby effectively suppressing build-up, while minimizing the length of the molten resin in the space, thus suppressing necking-in.
The fluid chamber has the aforementioned counter face facing the space and the chill roll, and the fluid provided from the fluid chamber flows through a fluid channel along this counter face toward the die, so that the molten resin extruded in the space is provided via the flow of this fluid from the space to the chill roll so as to be along the shape of the counter face. Although the molten resin coming into contact with the rotating chill roll receives tension in the rotational direction of the chill roll, the molten resin in the space receiving the fluid pressure from the fluid flowing through the fluid channel along the shape of the counter face will form the extending posture along the counter face.
Herein, preferably, the counter face of the fluid chamber includes a first region and a second region, the first region having a complementary shape of a rolled face of the chill roll, the second region being curved from the first region toward a side of the exit of the die to reach an upper end of the fluid chamber. The fluid channel includes a first channel and a second channel, the first channel being between the first region and molten resin on the rolled face, the second channel being between the second region and molten resin residing in a space below the exit. The first channel contiguous to the second channel has a channel cross-sectional width that is narrower than an internal channel of the fluid chamber on an upstream side of the fluid flow.
According to the present inventors, since the first channel that is contiguous to the second channel has a narrow cross-sectional width (the cross-section of the second channel is narrower than that of the internal channel of the fluid chamber), a narrowing effect of the fluid flowing through the second channel corresponding to the second region can be obtained, so that during the course where the cross-sectional width (a gap width from the counter face to the chill roll, strictly speaking a gap width from the counter face to molten resin in close contact with the chill roll where fluid flows) of the second channel leading to the upper end of the fluid chamber changes, the molten resin can have self-stability against such a change. For instance, when the molten resin moves due to a disturbance (e.g., disturbed outside air) in the direction to widen the cross-sectional width of the second channel under the condition where the pressure of the fluid provided from the fluid chamber is constant, the flow rate from the fluid chamber increases due to a decrease of channel resistance of the fluid channel, since the cross-sectional width of the first channel is constant (channel resistance is constant), pressure loss increases in the amount corresponding to the increase in the flow velocity, and static pressure at the second channel decreases so that the second channel of the molten resin returns to the narrowing direction. On the other hand, when the molten resin moves in the direction to narrow the cross-sectional width of the second channel, the flow rate from the fluid chamber decreases due to an increase of channel resistance of the fluid channel, since the cross-sectional width of the first channel is constant (channel resistance is constant), pressure loss decreases in the amount corresponding to the increase in the flow velocity, and static pressure at the second channel increases so that the second channel of the molten resin returns to the widening direction. In this way, during the course where the cross-sectional width changes at the second channel, the molten resin has self-stability against such a change.

The first channel contiguous to the second channel has a narrow cross-sectional width, resulting in a stable (constrained) extending posture of the molten resin in the space from the end face of the die on the exit side to a contact position with the chill roll along the second channel. Further, the flow rate flowing through the fluid channel can be narrowed, thus leading to an effect of preventing film wobbling.

Herein, in one embodiment, channel resistance of the first channel may be 0.3 time or more of channel resistance of the second channel.

The self-stability of the cross-sectional width of the second channel becomes higher with increasing a ratio of a static pressure difference between the entrance and the exit of the first channel having constant resistance with reference to a static pressure difference between the entrance (boundary with the first channel) and the exit (boundary between the second channel and the upper end face of the fluid chamber) of the second channel having channel resistance varying with a disturbance. That is, the self-stability of the second channel increases with a value of the channel resistance of the first channel /the channel resistance of the second channel in a steady state. In other words, this ratio has to be adjusted to be larger so that at least the influence of a change in static pressure becomes larger than the influence of a change in radius of curvature. Further, the self-stability can be evaluated by the magnitude of a pressure variation and a flow rate variation when a pressure change occurs with reference to a change of the cross-sectional width of the second channel. When the channel resistance of the first channel is made larger with reference to the second channel, in the case where necessary static pressure at the entrance of the second channel is the same, the chamber source pressure increases, and in the case where the cross-sectional width of the second channel changes, a pressure variation of the necessary static pressure increases and a flow rate variation decreases. In this way, an increase of the channel resistance at the first channel increases self restoring force.

Although the first channel preferably has higher channel resistance, the channel resistance is proportional to the channel length and inversely proportional to the cube of the channel cross-sectional width according to the expression relating to the flow rate and the pressure loss. As the length of the first channel increases, the channel resistance increases, but a position where the molten resin is pressed against the chill roll with pressure in the fluid chamber becomes away from the exit of the die. That is, it is better to let the molten resin quickly adhere to the chill roll after coming into contact with the chill roll for cooling and solidification, and from that aspect, this positional relationship is unfavorable and the amount of necking-in will increase. On the other hand, decreasing of the channel cross-sectional width can be effective because the channel resistance increases with the cube of the channel resistance. In the case of a conventional film production apparatus, this channel cross-sectional width cannot be narrowed because the resin on the surface of the chill roll is thick at the both edges. On the other hand, necking-in becomes small in the aforementioned film production apparatus of the present invention, and an amount of increase in thickness at the both edges of the resin on the surface of the chill roll becomes less, and therefore this channel cross-sectional width can be made narrower. It was found that practically applicable dimension of this channel cross-sectional width ($a_1$) is 1 mm or less, and more preferably 0.5 mm or less. A larger value of the first channel resistance/the second channel resistance is preferable, and it was found that practically to secure the value of 0.3 or more is desirable.

In a preferable embodiment of the film production apparatus of the present invention, the upper end face of the fluid chamber may define a flat face, the second region of the counter face may have a radius of curvature increasing toward an intersection with the upper end face, and molten resin extruded from the exit may be extended in the space below and thereafter reach the rolled face so as to be along the second region via the second channel while receiving the fluid pressure, and may come into close contact with the rolled face so as to be along the first region via the first channel.

Since there is pressure loss from the entrance to the exit in the second channel, in order to make the channel cross-sectional width of the second channel constant, the radius of curvature thereof has to be increased toward the exit side, i.e., toward the upper end side of the fluid chamber. Meanwhile, since the pressure loss is proportional to the channel length, the second region of the counter face may have a shape such that the radius of curvature thereof increases toward the intersection with the upper end face, whereby the following expression holds, relating to the radius of curvature of the second channel, the take-up tension per unit channel cross-sectional width, static pressure at the entrance and the exit of the second channel and the length of the second channel:

$$r + a_2 = T \Big/ \big[ p_{2in}(L_2 - x) - p_{2out} \big]$$

where r: radius of curvature of the second channel (m), $a_2$: channel cross-sectional width of the second channel (m), $r+a_2$: radius of curvature of molten resin (m), T: take-up tension per unit channel cross-sectional width (N/m), $p_{2in}$: static pressure at the entrance of the second channel (Pa), $p_{2out}$: static pressure at the exit of the second channel (Pa), $L_2$: length of the second channel, x: distance from the entrance in the second channel ($0 \leq x \leq L_2$).

In another embodiment of the film production apparatus of the present invention, the second region may include a curved part that is curved from the first region to a side of the exit of the die, and a linear part that is contiguous to the curved part and orthogonal to the upper end face.

In the above expression, let that the static pressure at the exit of the second channel is atmospheric pressure, $p_{2out}$ is 0 and r is infinite, i.e., a straight line. Therefore, conversely the second region may be configured including a curved part and a linear part that is contiguous to the curved part and orthogonal to the upper end face, whereby the static pressure at the exit of the second channel can be adjusted to about atmospheric pressure.

In another embodiment of the film production apparatus of the present invention, the second region may include a curved part that is curved from the first region to a side of the exit of the die, and a linear part that is contiguous to the curved part and is inclined in a direction of expanding a channel cross-section of the second channel and of being away from the exit to intersect with the upper end face.

When dynamic pressure in the vicinity of the exit in the second channel cannot be ignored, i.e., when negative pressure greatly impacts on the extending posture of the molten resin in the space at the exit, the channel at the exit may be expanded to decrease the dynamic pressure at the exit in the second channel, whereby dynamic pressure (flow velocity) can be decreased.

In a preferable embodiment of the film production apparatus of the present invention, the lower end face of the die facing the exit and the upper end face of the fluid chamber both may define flat faces, between the upper end face of the fluid chamber and the lower end face of the die, a fluid channel may be further extended along the counter face to define a third channel, and fluid flowing through the third channel is discharged in a downstream direction having a channel cross section larger than the third channel.

For instance, the third channel has a channel cross-sectional width that becomes larger toward the exit side so as to increase the channel cross section, whereby dynamic pressure (flow velocity) can be decreased.

In another embodiment of the film production apparatus of the present invention, a channel cross-sectional area of the third channel may be adjusted so that fluid pressure in the third channel becomes larger than atmospheric pressure.

The channel cross-sectional area of the third channel contiguous to the second channel adjusted so that the fluid pressure in the third channel becomes larger than atmospheric pressure can eliminate an influence of negative pressure on molten resin in the vicinity of the exit of the die. In this case, since the generation position of negative pressure moves to the exit position of the third channel, the molten resin extended in the space will not be influenced by the negative pressure.

In a preferable embodiment of the film production apparatus of the present invention, the fluid chamber may be configured to provide fluid of at least two types of fluid pressure, and fluid pressure of fluid provided from an end region of the fluid chamber in a width direction is adjusted relatively higher than fluid pressure of fluid provided from an inside region thereof.

The fluid provided from the fluid chamber to the fluid channel actually leaks to the outside from both end parts in the width direction (corresponding to the width direction of the film) of the molten resin at a part of any channel of the first channel, the second channel and the third channel. Further, if necking-in, albeit small, occurs at these both ends parts of the molten resin, the molten resin film will be thick and the take-up tension will increase accordingly. Then, pressure at the end regions in the width direction of the fluid chamber, i.e., at parts where both end parts of the molten resin pass through may be set higher than that in the internal region. For instance, the end region of the fluid chamber in the width direction and the inside region thereof are defined, whereby high-pressure fluid can be provided from the end region of the fluid chamber in the width direction. Air leaking from end parts at each channel of the first channel or later can be supplemented with high-pressure fluid at the both end parts. This leads to another effect of intimate contact of the molten resin at end parts on the surface of the chill roll with high-pressure as well, and therefore necking-in that might occur before solidification can be effectively suppressed.

In a preferable embodiment of the film production apparatus of the present invention, the fluid chamber may include an internal channel and a tubular part surrounding the internal channel, the internal channel may communicate with an opening facing the counter face, and a part of an end face of the tubular part may define the second region of the counter face, the tubular part at an end region in a width direction may be provided with an opening facing a part of the end face of the tubular part and a separate channel communicating with the opening, and fluid may be provided from the internal channel of the fluid chamber and flows through the fluid channel, and fluid may be further provided from the separate channel into the fluid channel.

The separate channel with a narrowed cross-section is provided at an end region in the width direction of the tubular part so as to provide fluid that is independent of the fluid flowing through the fluid channel supplied from the fluid chamber, and air leaking from end parts at each channel of the second channel or later can be supplemented with the fluid provided from the separate channel, whereby static pressure necessary for balance of the radius of curvature of the molten resin and the take-up tension can be secured.

In a preferable embodiment of the film production apparatus of the present invention, temperature of the fluid provided from the separate channel may be higher than temperature of the fluid flowing through the fluid channel.

The fluid provided from the separate channel may be set at a relatively high temperature, whereby the temperature of the molten resin can be kept at a high temperature and the take-up tension in the overall width direction can be decreased.

Further, in a preferable embodiment of the film production apparatus of the present invention, the fluid chamber may include an internal channel and a tubular part surrounding the internal channel, and the tubular part may be provided with rollers at two side faces thereof in a width direction, and the rollers rotatably come into contact with the chill roll so as to secure a channel cross-sectional width of the first channel at least.

The rollers provided at two side faces (side plates) of the fluid chamber and rotatably coming into contact with the rolled face of the chill roll allow the channel cross-sectional width especially in the first channel to be secured precisely, and adjustment of the positions of the rollers facilitates to change the cross-sectional width of the first channel.

The present invention extends to a method for producing film as well. A method for producing film of the present invention includes the steps of taking up molten resin extruded downward from an exit bored at a lower end face of a die by a rotating chill roll located below the exit and cooling the molten resin for solidification by the chill roll to produce film. In this method, fluid is provided from a fluid chamber to a space between the exit and the chill roll located below, and the molten resin is taken up by the chill roll while flowing the fluid through a fluid channel along a counter face of the fluid chamber facing the space and the chill roll toward the die while applying a fluid pressure in a direction pushing back the molten resin existing in the space against displacement of the molten resin taken up in a rotational direction of the chill roll.

In this production method, preferably, the counter face includes a first region and a second region, the first region having a complementary shape of a rolled face of the chill roll, the second region being curved from the first region toward a side of the exit of the die to reach an upper end of the fluid chamber, the fluid channel includes a first channel and a second channel, the first channel being between the first region and molten resin on the rolled face, the second channel being between the second region and molten resin residing in a space below the exit, and the first channel contiguous to the second channel has a channel cross-sectional width that is narrower than an internal channel of the fluid chamber that is an upstream side of the fluid flow.

Preferably, the upper end face of the fluid chamber defines a flat face, the second region of the counter face has a radius of curvature increasing toward an intersection with the upper end face, and molten resin extruded from the exit is extended in the space below and thereafter is allowed to reach the rolled face so as to be along the second region via the second channel while giving the fluid pressure to the molten resin, and is allowed to come into close contact with the rolled face so as to be along the first region via the first channel.

In another aspect of the production method of the present invention, the second region may be orthogonal to the upper end face, and molten resin extruded from the exit may be extended vertically downward in the space and thereafter may be allowed to reach the rolled face so as to be along the second region via the second channel while giving the fluid pressure to the molten resin, and may be allowed to come into close contact with the rolled face so as to be along the first region via the first channel. In this aspect, the second region may include a curved part that is curved from the first region to a side of the exit of the die, and a linear part that is contiguous to the curved part and orthogonal to the upper end face.

In another aspect of the production method of the present invention, the second region may include a curved part that is curved from the first region to a side of the exit of the die, and a linear part that is contiguous to the curved part and is inclined in a direction of expanding a channel cross-section of the second channel and of being away from the exit to intersect with the upper end face.

In a preferable embodiment of the production method of the present invention, the lower end face of the die facing the exit and the upper end face of the fluid chamber both may define flat faces, between the upper end face of the fluid chamber and the lower end face of the die, a fluid channel may be further extended along the counter face to define a third channel, and fluid may be allowed to flow through the third channel, following the second channel, and may be discharged in a downstream direction having a channel cross section larger than the third channel. In this aspect, a channel cross-sectional area of the third channel may be adjusted so that fluid pressure in the third channel becomes larger than atmospheric pressure.

In another aspect of the production method of the present invention, channel resistance of the first channel may be adjusted to be 0.3 time or more of channel resistance of the second channel.

In another aspect of the production method of the present invention, preferably, the fluid chamber is configured to provide fluid of at least two types of fluid pressure, and fluid pressure of fluid provided from an end region of the fluid chamber in a width direction is adjusted relatively higher than fluid pressure of fluid provided from an inside region thereof.

In another aspect of the production method of the present invention, the fluid chamber may include an internal channel and a tubular part surrounding the internal channel, the internal channel may communicate with an opening facing the counter face, and a part of an end face of the tubular part may define the second region of the counter face, the tubular part at an end region in a width direction may be provided with an opening facing a part of the end face of the tubular part and a separate channel communicating with the opening, and fluid may be provided from the internal channel of the fluid chamber and flow through the fluid channel, and fluid may be further provided from the separate channel into the fluid channel. Herein, preferably, temperature of the fluid provided from the separate channel is higher than temperature of the fluid flowing through the fluid channel.

In a preferable embodiment of the production method of the present invention, preferably, the fluid chamber includes an internal channel and a tubular part surrounding the internal channel, and the tubular part is provided with rollers at two side faces thereof in a width direction, and the rollers rotatably come into contact with the chill roll so as to secure a channel cross-sectional width of the first channel at least.

EFFECTS OF THE INVENTION

As can be understood from the above description, according to the film production apparatus and the production method of the present invention, fluid provided from a fluid chamber is allowed to flow through a fluid channel along a counter face of the fluid chamber facing a space below a die exit and a chill roll, and molten resin existing in the space, which is about to be deformed and be taken up in a rotating direction of the chill roll, is pushed back by the fluid pressure of the fluid flowing through this fluid channel. Thereby, the molten resin extruded vertically downward from the exit can be extended as vertically downward as possible, and the length of the molten resin existing in the space can be minimized. Therefore, the film production apparatus and the production method of the present invention are capable of exerting a good effect of suppressing necking-in and effectively preventing film wobbling, and further exerting a good effect of suppressing build-up having a trade-off relationship with the suppression of necking-in.

BRIEF DESCRIPTION OF THE DRAWINGS

Fig. 1 schematically illustrates one embodiment of a film production apparatus of the present invention.
Fig. 2 is an enlarged view of part II of Fig. 1, illustrating a space between a die exit and a chill roll and one embodiment of a fluid chamber, where Fig. 2a explains a state where fluid pressure of fluid flowing through a fluid channel acts in the direction pushing back the deformation of molten resin in the space between the die exit and the chill roll, and Fig. 2b is a view taken along the arrow b-b of Fig. 2a.
Fig. 3a explains a first channel, a second channel and a third channel formed among the fluid chamber, the chill roll, the space and the die in the embodiment of Fig. 2 and a counter face of the fluid chamber, and Fig. 3b and Fib. 3c explain other embodiments of the counter face of the fluid chamber.
Fig. 4 describes a local protrusion formed in the molten resin at the second channel.
Fig. 5a describes another embodiment of the fluid chamber, and Fig. 5b is a view taken along the arrow b-b of Fig. 5a.
Fig. 6a describes still another embodiment of the fluid chamber, and Fig. 6b is a view taken along the arrow b-b of Fig. 6a.
Fig. 7a describes a further embodiment of the fluid chamber, and Fig. 7b is a view taken along the arrow b-b of Fig. 7a.
Fig. 8 schematically illustrates a conventional film production apparatus that was used for the experiment to measure the thickness distribution in the width direction and the thickness distribution in the longitudinal direction (conveyance direction by the chill roll) of the formed film.
Fig. 9a shows a measurement result of the thickness distribution in the width direction of the film that is produced by the production apparatus of the present invention, and Fig. 9b shows a measurement result of the thickness distribution in the width direction of the film that is produced by the conventional production apparatus.
Fig. 10a shows a measurement result of the thickness distribution in the longitudinal direction of the film that is produced by the production apparatus of the present invention, and Fig. 10b shows a measurement result of the thickness distribution in the longitudinal direction of the film that is produced by the conventional production apparatus.
Fig. 11a describes the state where a spatial distance between the die exit and the chill roll differs with the relative positional relationships between them, and Fig. 11b describes the state where the length of the molten resin in the space becomes longer by being pulled by the rotation of the chill roll in the production apparatus including the die exit provided vertically above the chill roll.

DESCRIPTION OF REFERENCE NUMBERS

[0064]

1:                    Die

| | |
|---|---|
| 1a: | Exit |
| 1b: | Lower end face |
| 2: | Extruder |
| 3: | Chill roll |
| 4: | Wind-up roll |
| 5, 5A, 5B, 5C, 5D, 5E: | Fluid chamber |
| 5a: | Top plate of tubular part |
| 5a1: | First region (counter face) |
| 5a2: | Second region (counter face) |
| 5a2': | Curved part in second region |
| 5a2": | Linear part in second region (vertical line) |
| 5a2''': | Linear part in second region (inclined line) |
| 5a3: | Upper end face |
| 5b: | Side face (side plate) |
| 5c: | Bottom plate |
| 5d: | Internal channel |
| 5e: | Channel at end region in width direction |
| 5f: | Separate channel |
| 5g: | Roller |
| 6: | Compressor |
| 7: | Fluid providing unit |
| 10: | Production apparatus |
| fd: | Fluid |
| K: | Space |
| S: | Gap |
| p: | Fluid pressure |
| f1: | Molten resin |
| FL: | Film |

BEST MODE FOR CARRYING OUT THE INVENTION

The following describes a film production apparatus and a production method of the present invention, with reference to the drawings.

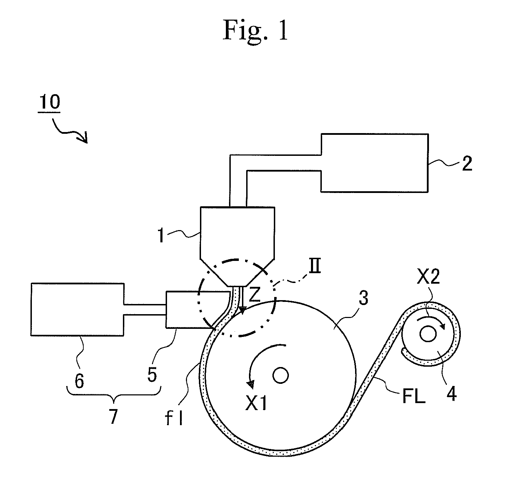

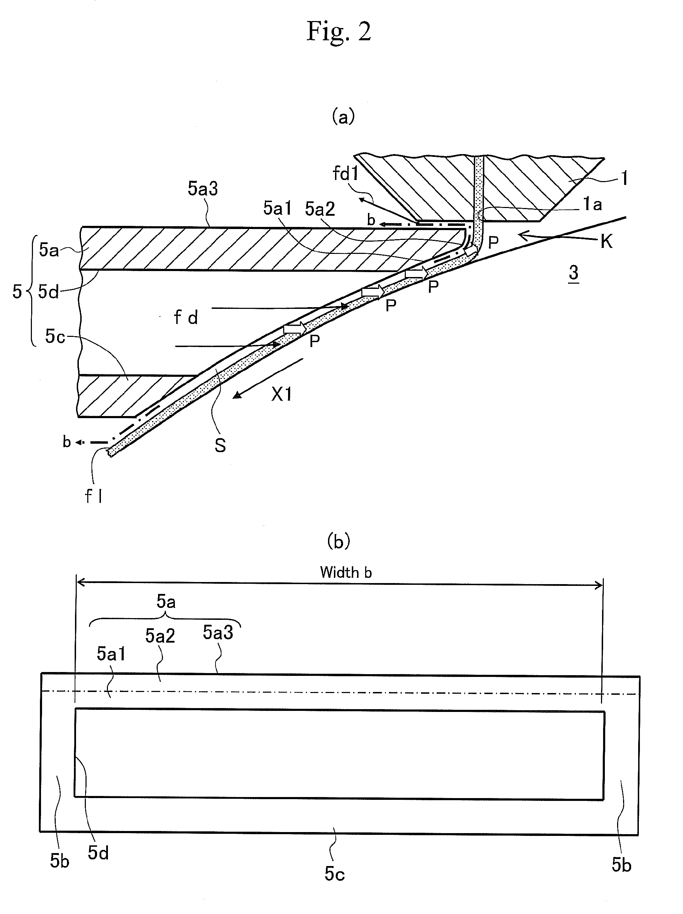

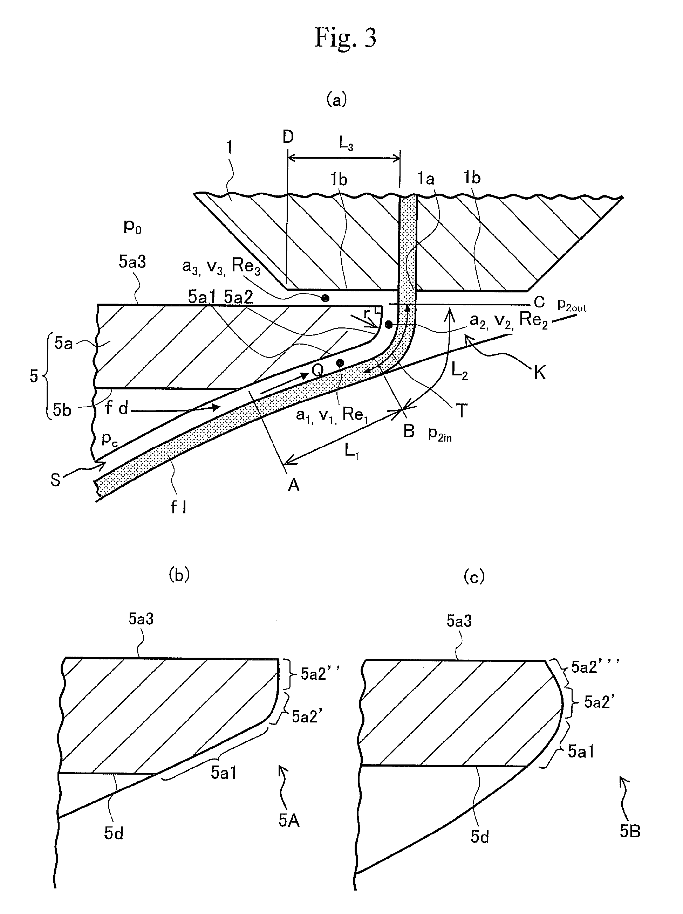

Fig. 1 schematically illustrates one embodiment of a film production apparatus of the present invention, and Fig. 2 is an enlarged view of part II of Fig. 1, illustrating a space between a die exit and a chill roll and one embodiment of a fluid chamber, where Fig. 2a explains the state where fluid pressure of the fluid flowing through a fluid chamber acts in the direction pushing back the deformation of molten resin in the space between the die exit and the chill roll, and Fig. 2b is a view taken along the arrow b-b of Fig. 2a. Fig. 3a explains a first channel, a second channel and a third channel formed among the fluid chamber, the chill roll, the space and the die in the embodiment of Fig. 2 and a counter face of the fluid chamber, and Fig. 3b and Fib. 3c explain other embodiments as the counter face of the fluid chamber.

A production apparatus 10 illustrated roughly includes: an extruder 2 that extrudes molten resin; a die 1 communicating with the extruder 2 and including an exit 1a with a predetermined width; a chill roll 3 located below the die 1, which is rotatable (X1 direction) at a predetermined number of revolutions; a fluid providing unit 7 including a fluid chamber 5 that provides fluid to molten resin f1 extruded (Z direction) through the exit 1a; and a wind-up roll 4 that rewinds (X2 direction) film FL obtained by cooling the molten resin fl for solidification at the chill roll 3.

The fluid providing unit 7 includes a compressor 6 that forms pressure air and the fluid chamber 5 that provides the pressure air.

As illustrated in Fig. 2b, the fluid chamber 5 includes a tubular part (top plate 5a, side plates 5b, bottom plate 5c) in a rectangular frame form and a central channel 5d, and as illustrated in Fig. 2a, the air chamber 5 has a counter face on the chill roll 3 side in a shape that is complementary to that of the chill roll 3.

As illustrated in Figs. 2 and 3, the counter face facing the chill roll 3 and the space K at the top plate 5a of the tubular part includes a first region 5a1 in a substantially linear shape (including both of a curved face and a straight line, and may be any of them) having a complementary shape of the chill roll 3, and a second region 5a2 that is curved from the first region 5a1 toward the side of the exit 1a of the die 1 to be orthogonal to an upper end face 5a3 of the fluid chamber 5.

A point of intersection of the second region 5a2 and the upper end face 5a3 that are orthogonal to each other is provided at a position set back from the exit 1a facing a flat lower end face 1b of the die 1 by a predetermined width.

The molten resin fl extruded downward from the exit 1a is elongated in the space K to come into contact with the chill roll 3, and is wound up around the rotating chill roll 3.

The fluid fd generated by the compressor 6 is provided through the internal channel 5d to the molten resin fl on the surface of the chill roll 3, and then flows upward along a gap S (fluid channel) between the molten resin fl and the fluid chamber 5 while giving fluid pressure p to the molten resin f1. The fluid fd flowing upward flows through the fluid channel along the counter face, while giving the fluid pressure p to the molten resin fl extending from the exit 1a to the below space K, whereby as illustrated in Fig. 3, the molten resin extruded from the exit 1a vertically downward, especially the molten resin in the vicinity of this exit 1a in the space K is elongated vertically downward, is allowed to reach the roll face so as to be along the second region 5a2 via the fluid channel and to come into close contact with the rolled face so as to be along the first region 5a1 via the fluid channel.

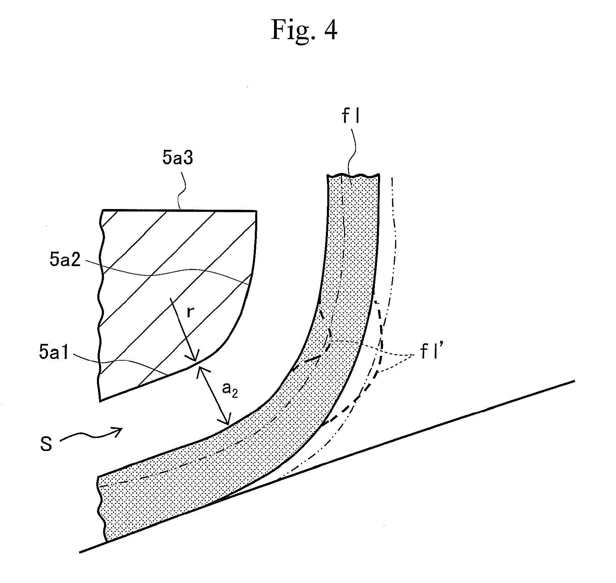

Referring now to Fig. 3a, the following describes an effect from the fluid channel formed with the fluid chamber 5 including the counter face as illustrated and the chill roll 3 of stabilizing the extending posture (conveyance path) of the molten resin extending from the exit 1a of the die 1 to the surface of the chill roll 3. Herein, Fig. 4 describes a local protrusion formed in the molten resin at the second channel.

In this drawing, the gap S region corresponding to the first region 5a1 of the counter face is the first channel, then the gap S region corresponding to the second region 5a2 is the second channel and then the gap between the upper end face 5a3 of the fluid chamber 5 and the lower end face 1b of the die 1 is the third channel. In this drawing, r: radius of curvature of the counter face at the entrance of the second channel corresponding to the second region; A: a position of the entrance of the first channel; B: a position of the exit of the first channel (or a position of the entrance of the second channel); C: a position of the exit of the second channel (or a position of the entrance of the third channel); D: a position of the exit of the third channel; $p_c$: chamber source pressure, $p_0$: air pressure, $p_{2in}$: entrance pressure of the second channel; $p_{2out}$: exit pressure of the second channel (without consideration of the third channel, $p_{2out}=p_0$); Q: flow rate; T: take-up tension; for the first channel, $L_1$: length, $a_1$: channel cross-sectional width (gap), $v_1$: flow velocity; $Re_1$: Reynold's number, for the second channel, $L_2$: length, $a_2$: channel cross-sectional width (gap), $v_2$: flow velocity; $Re_2$: Reynold's number, and for the third channel, $L_3$: length, $a_3$: channel cross-sectional width (gap), $v_3$: flow velocity; $Re_3$: Reynold's number.

In the second channel, the following expression holds, where T (N/m) denotes a take-up tension per unit width of the molten resin fl, r (m) denotes the radius of curvature, $a_2$ (m) denotes the channel cross-sectional width of the second channel and p (Pa) denotes static pressure:

$$r + a_2 = T/p \quad \cdots \cdots \cdots \cdots \cdots \cdots \cdots \cdots \cdots \cdots \cdots \cdots \cdots (\text{Ex. 1})$$

where a centrifugal force and dynamic pressure when the fluid changes the direction can be ignored.

That is, even when the cross-sectional width $a_2$ of the second channel changes locally, the state returns to the original radius of curvature where Expression 1 holds as long as the take-up tension T and the static pressure p do not change.

Further since the molten resin f1 facing the second channel has a curved face, local unevenness will hardly occur due to the stiffness. However, as illustrated in Fig. 4, when a protrusion fl' occurs locally or momentarily due to any disturbance in the second channel, the radius of curvature at the foot part of this protrusion fl' has to be made negative. At this time, a part with a negative radius of curvature cannot exist due to the pressure of the second channel, and the radius of curvature becomes large and gentle. As a result, the channel cross-sectional width $a_2$ of the second channel increases, but the molten resin fl will move in the direction of narrowing the channel cross-sectional width of the second channel due to a self restoring ability described later, thus returning to the original channel cross-sectional width $a_2$ of the second channel and the radius of curvature $r+a_2$. This radius of curvature of the molten resin fl along the second channel can be set in a wide range, and a smaller radius of curvature leads to a small distance between the exit 1a of the die and a contact position to the chill roll 3, enabling effective suppression of necking-in.

Since the first channel that is contiguous to the second channel has a narrow cross-sectional width, a narrowing effect of the fluid fd flowing through the second channel corresponding to the second region 5a2 can be obtained, so that during the course where the cross-sectional width of the second channel leading to the upper end face 5a3 of the fluid chamber 5 changes, the molten resin can have self-stability against such a change. For instance, when the molten resin moves due to a disturbance (e.g., disturbed outside air) in the direction to widen the cross-sectional width of the second channel under the condition where the pressure of the fluid provided from the fluid chamber 5 is constant, the flow rate from the fluid chamber 5 increases due to a decrease of channel resistance of the fluid channel, since the cross-sectional width of the first channel is constant (channel resistance is constant), pressure loss increases in the amount corresponding to the increase in the flow velocity, and static pressure at the second channel decreases so that the second channel of the molten resin returns to the narrowing direction. On the other hand, when the molten resin moves in the direction to narrow the cross-sectional width of the second channel, the flow rate from the fluid chamber decreases due to an increase of channel resistance of the fluid channel, since the cross-sectional width of the first channel is constant (channel resistance is constant), pressure loss decreases in the amount corresponding to the increase in the flow velocity, and static pressure at the second channel increases so that the second channel of the molten resin returns to the widening direction. In this way, during the course where the cross-sectional width changes at the second channel, the molten resin has self-stability against such a change.

If the first channel does not have channel resistance and the molten resin moves to widen the cross-sectional width of the second channel, the source pressure in the chamber becomes the pressure in the second channel, so that the molten resin will move to widen the cross-sectional width of the channel, which means that the fluid path does not have self-stability. Accordingly, the first channel having the narrowed cross-sectional width is must for the stability of the fluid channel.

As the second channel has a wider cross-sectional width, the molten resin has a larger radius of curvature, which means balance with take-up tension at less static pressure. Actually the shapes of both of the first channel and the second channel may be decided so that, when the channel cross-sectional width becomes wide, a decrease in static pressure at the second channel becomes larger than a decrease in necessary static pressure due to an increase of the radius of curvature of the molten resin.

The first channel provided achieves balance at necessary pressure $p_{2in}=T/(r+a_2)$ of the entrance of the second channel without changing the chamber operating condition even when the take-up tension T of the molten resin is somewhat changed due to a change of forming conditions such as a take-up speed or an extrusion temperature. The range of the balance can be made larger by correctly selecting the chamber source pressure and the channel resistance of the first channel.

In this way, the first channel provided results in a stable (constrained) extending posture (conveyance path) of the molten resin in the space from the exit 1a of the die 1 to a contact with the chill roll 3 along the second channel. Further, the first channel can narrow the flow rate in the channel, leading to better effect of preventing film wobbling.

The self-stability of the cross-sectional width of the second channel becomes higher with increasing a ratio of a static pressure difference between the entrance A and the exit B of the first channel having constant resistance with reference to a static pressure difference between the entrance B (boundary with the first channel) and the exit C (boundary between the second channel and the upper end face 5a3 of the fluid chamber 5) of the second channel having channel resistance varying with a disturbance. That is, the self-stability of the second channel increases with a value of the channel resistance of the first channel / the channel resistance of the second channel in a steady state. In other words, this ratio has to be adjusted to be larger so that at least the influence of a change in static pressure becomes larger than the influence of a change in radius of curvature.

Further, the self-stability can be evaluated by the magnitude of a pressure variation and a flow rate variation when a pressure change occurs with reference to a change of the cross-sectional width of the second channel. When the channel resistance of the first channel is made larger with reference to the second channel, in the case where necessary static pressure at entrance B of the second channel is the same, the chamber source pressure $p_c$ increases, and in the case where the cross-sectional width $a_2$ of the second channel changes, a pressure variation of the necessary static pressure increases and a flow rate variation decreases. In this way, an increase of the channel resistance at the first channel increases self restoring force.

Although the first channel preferably has higher channel resistance, the channel resistance is proportional to the channel length and inversely proportional to the cube of the channel cross-sectional width according to the expression relating to the flow rate Q and the pressure loss. As the length $L_1$ of the first channel increases, the channel resistance increases, but a position where the molten resin is pressed against the chill roll 3 with pressure in the fluid chamber 5 becomes away from the exit 1a of the die. That is, it is better to let the molten resin quickly adhere to the chill roll 3 after coming into contact with the chill roll 3 for cooling and solidification, and from that aspect, this positional relationship is unfavorable and the amount of necking-in will increase. On the other hand, decreasing of the channel cross-sectional width $a_1$ can be effective because the channel resistance increases with the cube of the channel resistance. In the case of a conventional film production apparatus, this channel cross-sectional width cannot be narrowed because the resin on the surface of the chill roll is thick at the both edges. On the other hand, necking-in becomes small in the film production apparatus 10 illustrated, and an amount of increase in thickness at the both edges of the resin on the surface of the chill roll 3 becomes less, and therefore this channel cross-sectional width $a_1$ can be made narrower. It is confirmed that practically applicable dimension of this channel cross-sectional width $a_1$ is 1 mm or less, and more preferably 0.5 mm or less.

A larger value of the first channel resistance/the second channel resistance is preferable, and practically it is desirable to secure the value of 0.3 or more.

Since there is pressure loss from the entrance B to the exit C in the second channel, in order to make the channel cross-sectional width $a_2$ of the second channel constant, the radius of curvature r thereof has to be increased toward the exit side, i.e., toward the point of intersection with the upper end face 5a3 of the fluid chamber 5. Meanwhile, since the pressure loss is proportional to the channel length, the second region of the counter face may have a shape such that the radius of curvature r thereof increases toward the point of intersection with the upper end face 5a3, whereby the following Expression (Ex. 2) holds, relating to the radius of curvature of the second channel, the take-up tension T per unit channel cross-sectional width, static pressure at the entrance B and the exit C of the second channel and the length $L_2$ of the second channel:

$$r + a_2 = T \Big/ \left[ p_{2in}\left(L_2 - x\right) - p_{2out} \right] \quad \cdots \cdots \cdots \cdots \cdots (\text{Ex. 2})$$

where r: radius of curvature of the second channel (m), $a_2$: channel cross-sectional width of the second channel (m), $r + a_2$: radius of curvature of the molten resin (m), T: take-up tension per unit channel cross-sectional width (N/m), $p_{2in}$: static pressure at the entrance of the second channel (Pa), $p_{2out}$: static pressure at the exit of the second channel (Pa), $L_2$: length of the second channel, x: distance from the entrance in the second channel ($0 \leq x \leq L_2$).

In Expression 2, let that the static pressure at the exit C of the second channel is atmospheric pressure, $p_{2out}$ is 0 and r is infinite, i.e., a straight line. Therefore, as in a fluid chamber 5A illustrated in Fig. 3b, conversely the second region may be configured so that the counter face includes a curved part 5a2' and a linear part 5a2" that is contiguous to the curved part 5a2' and orthogonal to the upper end face 5a3, whereby the static pressure at the exit C of the second channel can be adjusted to about atmospheric pressure.

When dynamic pressure in the vicinity of the exit C in the second channel cannot be ignored, i.e., when negative pressure greatly impacts on the extending posture of the molten resin in the space K at the exit C, the channel at the exit C may be expanded to decrease the dynamic pressure at the exit C in the second channel, whereby dynamic pressure (flow velocity) can be decreased. That is, in a fluid chamber 5B illustrated in Fig. 3c, the second region of the counter face is configured including a curved part 5a2' that is curved from the first region toward the exit 1a side of the die 1 and a linear part 5a2''' that is contiguous to the curved part 5a2', and is inclined in the direction expanding the channel cross-section of the second channel, i.e., in the direction away from the exit 1a to intersect with upper end face 5a3.

As illustrated in Figs. 2 and 3, a third channel is formed between the flat lower end face 1b of the die 1 and the upper end face 5a3 of the fluid chamber 5, so that the fluid flowing through the fluid channel is discharged downstream leading to the atmosphere while having a cross-sectional width larger than the cross-sectional width of the third channel after flowing through the third channel (discharged fluid fdl in Fig. 2). In this way, the third channel has a channel cross-sectional width $a_3$ that becomes larger toward the exit D side so as to increase the channel cross section, whereby dynamic pressure (flow velocity) can be decreased.

Herein, the channel cross-sectional area of the third channel is adjusted so that the fluid pressure in the third channel becomes larger than the atmospheric pressure. Such a channel cross-sectional area can be adjusted by adjusting the channel cross-sectional width $a_3$ of the third channel that is contiguous to the second channel, whereby influences of negative pressure on the molten resin in the vicinity of the exit 1a of the die 1 can be removed. In this case, since the generation position of negative pressure moves to the exit D side of the third channel, the molten resin extended in the space K will not be influenced by the negative pressure.

Herein the fluid pressure p, the number of revolutions of the chill roll 3, the extrusion rate of the molten resin and the like can be adjusted using a control computer not illustrated. The illustrated apparatus may be provided with a CCD camera or a video camera as needed so that the extending posture (vertical direction and the like) of the molten resin in the space K becomes visible. Then when the chill roll is rotated at a predetermined number of revolutions and the molten resin is extruded at a predetermined extrusion rate, for example, the extending posture of the molten resin in the space may be monitored with the video camera or the like, and the fluid pressure of the pressure air can be adjusted so that the extending posture of the molten resin in the space can be a desired posture by visually checking an image of this monitor.

The molten resin f1 may be pushed against on the chill roll 3 quickly for intimate contact by the fluid pressure p from the pressure fluid fd provided from the air chamber 5 and may be cooled for solidification, whereby the film FL produced securely can have the width similar to the width of the extruded molten resin fl.

Herein the resin materials to form film are not especially limited, and polyolefin, polyester, polyamide and their modifications and mixtures can be used, which are thermoplastic resins showing flowability by heating, for example.

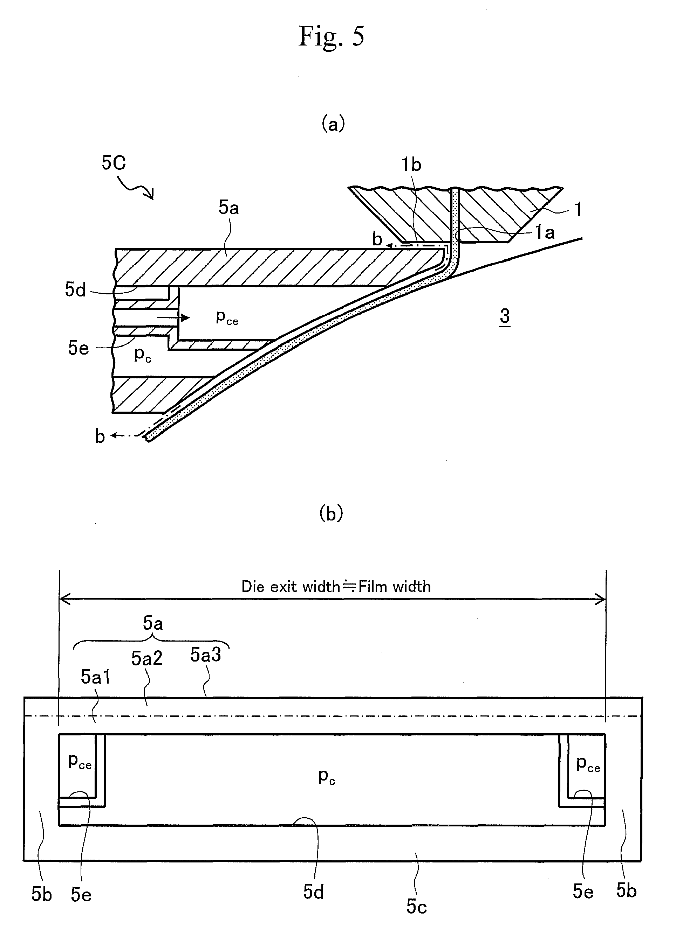

Figs. 5, 6 and 7 illustrate other embodiments of the fluid chamber.

A fluid chamber 5C illustrated in Fig. 5 includes the internal channel made up of three defined sections, including channels 5e, 5e at end regions of the fluid chamber 5C in the width direction and an internal region 5d inside them. The fluid pressure of the fluid provided from the channels 5e at the edge regions in the width direction is adjusted to be higher than the fluid pressure of the fluid provided from the internal region 5d of the fluid channel.

The fluid provided from the fluid chamber to the fluid channel actually leaks to the outside from both end parts in the width direction (corresponding to the width direction of the film) of the molten resin at a part of any channel of the first channel, the second channel and the third channel. Further, if necking-in, albeit small, occurs at these both ends parts of the molten resin, the molten resin film will be thick and the take-up tension will increase accordingly. Then, pressure at the end regions in the width direction of the fluid chamber, i.e., at parts where both end parts of the molten resin pass through may be set higher than that in the internal region. To this end, as illustrated in the drawing, air leaking from end parts at each channel of the first channel or later can be supplemented with high-pressure fluid at both end parts provided from the channels 5e at the end regions in the width direction. This leads to another effect of intimate contact of the molten resin at end parts on the surface of the chill roll 3 with high-pressure as well, and therefore necking-in that might occur before solidification can be effectively suppressed.

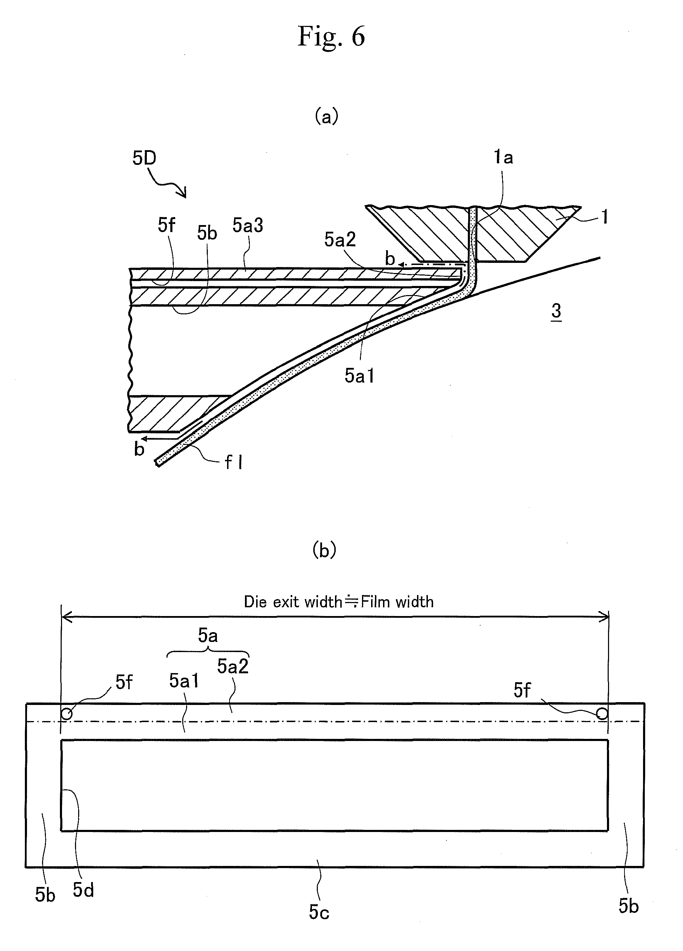

A fluid chamber 5D illustrated in Fig. 6 includes a separate channel 5f bored therein at an end region in the width direction of the tubular part other than an internal channel 5d, and this separate channel 5f has an opening facing the counter face at a part along the second region 5a2 of the counter face.

The separate channel 5f with a narrowed cross-section is provided at an end region in the width direction of the tubular part so as to provide fluid that is independent of the fluid flowing through the fluid channel supplied from the fluid chamber, and air leaking from end parts at each channel of the second channel or later can be supplemented with the fluid provided from the separate channel 5f, whereby static pressure necessary for balance of the radius of curvature of the molten resin and the take-up tension can be secured.

The fluid provided from the separate channel 5f may be set at a relatively high temperature, whereby the temperature of the molten resin can be kept at a high temperature and the take-up tension in the overall width direction can be decreased.

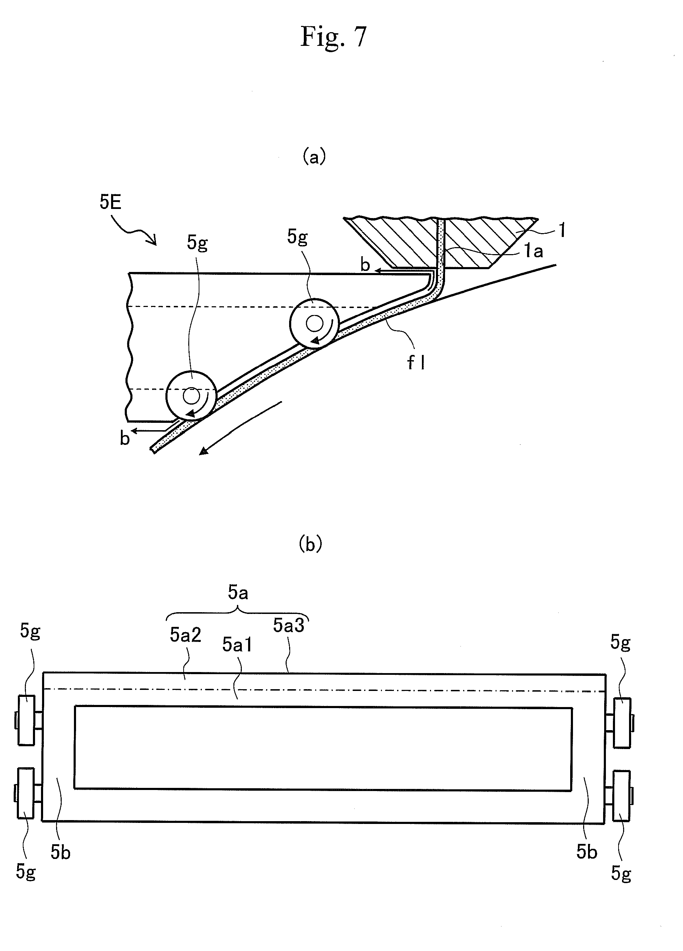

A fluid chamber 5E illustrated in Fig. 7 includes rollers 5g attached to two side plates 5b in the width direction of the tubular part. The rollers 5g rotatably come into contact with the chill roll 3 to secure the channel cross-sectional width of the first channel at least.

The rollers 5g allow the channel cross-sectional width especially in the first channel to be secured precisely, and adjustment of the positions of the rollers 5g facilitates to change the cross-sectional width of the first channel.

[Calculation results using actual values]

The molten resin has a take-up tension that is roughly decided depending on the resin and the formation condition, and the value thereof can be measured with a commercially-available capillary rheometer or the like. If the take-up tension can be found, the specifications of the apparatus can be decided by calculation, and therefore the present inventors performed the following various types of calculations.

(Assumption for the calculations)

Since a temperature change and a density change due to a pressure change are small, the fluid is assumed as isothermal non-compressible viscous fluid. Since the speed of the fluid in the second channel and the first channel is larger than the film formation speed, it is assumed as the flow between fixed parallel plates. For instance, when the film formation speed is 20 mpm (0.33 (m/s), for example, this is smaller than the air velocity in the internal channel of the fluid chamber. Therefore, approximation with flow between fixed parallel plates can be used. Further, assume that the take-up tension of the resin in the second channel is supported by static pressure. That is, since the flow rate is small, assume that a centrifugal force and dynamic pressure when the fluid changes the direction in the second channel as well as pressure loss due to rapid contraction or rapid expansion of the fluid channel can be ignored.

(Actual calculation results)

Let that take-up tension per unit width of molten resin: T=5 (N/m),
radius of curvature in second region corresponding to second channel adjacent to first channel: r=5×$10^{-3}$ (m),
channel cross-sectional width of first channel: $a_1$=0.3×$10^{-3}$ (m), and
channel cross-sectional width of second channel: $a_2$=0.3×$10^{-3}$ (m),
necessary static pressure at the entrance of the second channel will be

$$p_{2in} = T/(r + a_2) = 5/((5 + 0.3) \times 10^{-3}) = 943(Pa)$$

The cross-sectional width of the second channel can be made constant by increasing the radius of curvature from entrance B to exit C of the second channel so as to be infinite (straight line) at exit C. Let that $p_{2in}$=943(Pa) at entrance B and $p_0$=0 (atmospheric pressure) at exit C of the second channel, pressure loss in the second channel will be $\Delta p_2$=$p_{2in}$-$p_0$=943(Pa). Let that fluid viscosity: $\mu$=18×$10^{-3}$ (Pa·s), the following expression holds for a necessary flow rate Q in the laminar flow region. Herein, although the following is for a laminar flow region, the same idea can be applied to a turbulent flow region as well just using a different expression.

$$Q = \frac{1}{12} \frac{\Delta P_2}{\mu} \frac{a_2^3 b}{L_2} = \frac{1}{12} \frac{943}{18 \times 10^{-6}} \frac{(0.3 \times 10^{-3})^3 1.5}{15 \times 10^{-3}} = 0.0118(m^3/s)$$

The velocity of fluid in the second channel and the first channel is as follows, v=$v_1$=$v_2$ (∵$a_1$=$a_2$):

$$v = Q/(a_2 b) = 0.0118/(0.3 \times 10^{-3} \times 1.5) = 26.2(m/s)$$

Herein, dynamic viscosity of the fluid $\gamma$=$\mu$/$\rho$(m$^2$/s), density $\rho$=1.2 (kg/m$^3$), and average depth of channel m=cross-sectional area (m$^2$)/wetted perimeter (m).
Therefore

$$m = a_2 b/2(a_2 + b)$$

$$m \fallingdotseq a_2/2 \ (\because b \gg a)$$

Reynold's number Re will be as follows:

$$R_e = \frac{4mv}{\gamma} = \frac{4(a_2/2)v\rho}{\mu} = \frac{4 \times 0.15 \times 10^{-3} \times 26.2 \times 1.2}{18 \times 10^{-6}} = 1048 < 2000$$

It was confirmed that the flow of the fluid was a laminar flow region, and the relational expression about the pressure loss and the flow rate targeted for laminar flow was applied without problems.

Since the flow rate Q=0.0118 (m³/s), pressure loss $\Delta p_1$ in the first channel will be as follows,

$$\Delta p_1 = 12\mu\,Q\frac{L_1}{a_1^3 b} = 12 \times 18 \times 10^{-6} \times 0.0118\frac{25 \times 10^{-3}}{(0.3 \times 10^{-3})^3 \times 1.5} = 1573(Pa)$$

Dynamic pressure $p_v$ due to the flow velocity v in the first channel and the second channel will be as follows,

$$p_v = \frac{1}{2}\rho\ v^2 = \frac{1}{2} \times 1.2 \times 26.2^2 = 412(Pa)$$

Therefore, the source pressure $p_c$ in the chamber will be as follows:

$$p_c = \Delta p_1 + \Delta p_2 + p_v = 1573 + 943 + 412 = 2928(Pa)$$

In this way, pressure in the first channel, the second channel and the fluid chamber can be decided by measuring the take-up tension of the molten resin.

The following is calculation of the self-stability in the channels in this example. Firstly, the flow rate Q in the case of $a_2$=0.45×10⁻³ (m) where the channel cross-sectional width of the second channel is widened by 50% is found below.

Herein, the chamber source pressure $p_c$, pressure loss $\Delta p_1$ in the first channel, pressure loss $\Delta p_2$ in the second channel and the velocity in the second channel (fluid exit velocity) have the following relationships:

$$p_c = \Delta p_1 + \Delta p_2 + \frac{1}{2}\rho\ v_2^2 \qquad \cdots\cdots\cdots\cdots\cdots\cdots\cdots\cdots (a)$$

$$\Delta p_1 = 12\mu\frac{L_1}{a_1^3 b}Q \qquad \cdots\cdots\cdots\cdots\cdots\cdots\cdots\cdots (b)$$

$$\Delta p_2 = 12\mu\frac{L_2}{a_2^3 b}Q \qquad \cdots\cdots\cdots\cdots\cdots\cdots\cdots\cdots (c)$$

$$v_2 = \frac{Q}{a_2 b} \qquad \cdots\cdots\cdots\cdots\cdots\cdots\cdots\cdots (d)$$

Assigning Expressions (b), (c) and (d) to Expression (a) and organizing the result for Q, the following will be obtained:

$$\frac{1}{2}\rho(\frac{1}{a_2^2 b^2})Q^2 + 12\mu(\frac{L_1}{a_1^3 b} + \frac{L_2}{a_2^3 b})Q - p_c = 0$$

$$\frac{1}{2}\times 1.2(\frac{1}{(0.45\times 10^{-3})^2 (1.5)^2})\ Q^2 + 12\times 18\times 10^{-6}(\frac{25\times 10^{-3}}{(0.3\times 10^{-3})^3 (1.5)} + \frac{15\times 10^{-3}}{(0.45\times 10^{-3})(1.5)})Q - 2928 = 0$$

Solving the above expressions about Q, Q=0.01648 ($m^3$/s). Then, $V_2$=24.3 (m/s) from Expression (d). Further, since Q is constant, $V_1$=($a_2$/$a_1$) and $V_2$=36.4 (m/s).

Accordingly, Reynold's number $Re_1$ in the first channel and Reynold's number $Re_2$ in the second channel are as follows:

$$Re_1 = \frac{4m\cdot v}{\gamma} = \frac{4(a_1/2)\cdot v\cdot \rho}{\mu} = \frac{4\times 0.15\times 10^{-3}\times 36.4\times 1.2}{18\times 10^{-6}} = 1456 < 2000$$

$$Re_2 = \frac{4m\cdot v}{\gamma} = \frac{4(a_2/2)\cdot v\cdot \rho}{\mu} = \frac{4\times 0.225\times 10^{-3}\times 24.3\times 1.2}{18\times 10^{-6}} = 1458 < 2000$$

In Expressions (b) and (c), $\Delta p_1$=2185 (Pa) and $\Delta p_2$=388 (Pa), and since the pressure loss in the first channel increases, static pressure $p_{2in}$ at the entrance of the second channel will be $p_{2in}$=$p_{2in}$-$p_0$=$\Delta p_2$=388 (Pa).

Further checking necessary static pressure $p_{2in}$ for balance with the radius of curvature r+$a_2$ and the take-up tension T when the second channel is expanded, $p_{2in}$=T/(r+$a_2$)=5/((5+0.45)×$10^{-3}$)=917 (Pa), which is higher than the amount of pressure reduction in the second channel, and so it can be found that the molten resin has a self restoring force to return in the direction of narrowing the expanded channel cross-sectional width. If this value is lower than the static pressure in the second channel, the channel cross-sectional width increases in the widening direction so that no self restoring force is obtained.

In other words, when the channel cross-sectional width of the second channel described in the above Expression (d) is widened, the radius of curvature of the molten resin increases for balance with the take-up tensile at less static pressure. Actually, however, it was confirmed that since a decrease in the static pressure in the second channel when the channel cross-sectional width is widened is larger than a decrease in necessary static pressure due to the increase of the radius of curvature of the molten resin, the molten resin returns in the direction of narrowing the channel cross-sectional width of the second channel. In this way, the shapes of the first channel and the second channel may be decided so as to keep the self restoring force.

Next, calculation is performed in a similar manner for the case of $a_2$=0.15×$10^{-3}$ (m) where the channel cross-sectional width of the second channel is narrowed by 50%. Then, the flow rate Q and the flow velocity v of the channel are Q=0.0036 ($m^3$/s), $v_1$=8.0 (m/s) and $v_2$=15.9 (m/s), and Reynold's numbers Re are $Re_1$=320<2000, $Re_2$=318<2000.

As for pressure loss, $\Delta p_1$=479 (Pa) and $\Delta p_2$=2297 (Pa). That is, $p_{2in}$=2297 (Pa), so that pressure loss in the first channel decreases and static pressure at the entrance of the second channel increases. Necessary static pressure $p_{2in}$ for balance with the radius of curvature r+$a_2$ and the take-up tension T when the second channel is narrowed is $p_{2in}$=T/(r+$a_2$)=5/((5+0.15)×$10^{-3}$)=970 (Pa). As can be understood, this value is lower than the actual $p_{2in}$=2297 (Pa). As stated above, a self restoring force in the direction of widening the channel cross-sectional width of the narrowed second channel can be confirmed.

Calculation is performed similarly to the above for the case of increasing the length $L_2$ only of the second channel. When $L_2$=50×$10^{-3}$ (m), the chamber source pressure $p_c$=4500 (Pa) (the same $P_{2in}$=943 (Pa), Q=0.00118 ($m^3$/s) as those in the steady state). When the channel cross-sectional width of the second channel is widened by 50%, the entrance pressure $p_{2in}$ of the curved channel =345 (Pa) and Q=0.0145 ($m^3$/s), and when the channel cross-sectional width of the second channel is narrowed by 50%, the entrance pressure $p_{2in}$ of the second channel =2994 (Pa) and Q=0.0047 ($m^3$/s). Therefore, it can be found that a variation in pressure is larger and a variation in the flow rate is smaller than $L_2$=25×$10^{-3}$ (m).

When the first channel is exposed to atmosphere, the velocity approaches 0, and the velocity (dynamic pressure) at the exit of the first channel changes to static pressure. The static pressure generated in this case becomes negative pressure.

$$p_v = \frac{1}{2}\rho \; v^2 = \frac{1}{2}\times 1.2 \times 26.2^2 = 412(\text{Pa})$$

Therefore, negative pressure of -412 (Pa) at maximum is generated because of a decrease in flow velocity from the exit exposed to atmosphere.

When this negative pressure adversely affects the path of the molten resin at the die exit, the third channel with length $L_3$ and fluid cross-sectional width $a_3$ may be added, whereby the position exposed to atmosphere can be away from the molten resin. When dynamic pressure is converted completely into static pressure at the third channel, the fluid channel width $a_3$ will be as follows, where $L_3 = 10 \times 10^{-3}$ (m):

$$\Delta p_3 = 12\mu \frac{L_3}{a_3^3 b}Q$$

$$a_3 = (12\mu \frac{1}{\Delta p_3}\frac{L_3}{b}Q)^{\frac{1}{3}} = (12\times 18\times 10^{-6}\frac{1}{412}\frac{10\times 10^{-3}}{1.5}\times 0.0118)^{\frac{1}{3}} = 0.35\times 10^{-3}(\text{m})$$

In this way, although the effects from $a_3$ and $L_3$ can be calculated, $a_3$ of such a dimension leads to an increase of static pressure of 412 Pa at the exit of the molten resin as positive pressure. Actually, the channel cross-sectional width $a_3$ may be set larger than this calculation value so as to expect channel resistance to some extent, whereby negative pressure generated can be shifted to a position away from the die exit. Further adjustment to stabilize the molten resin in the vicinity of the die exit is desirable.

[Experiments to measure thickness distribution in width direction and thickness distribution in longitudinal direction (conveyance direction by chill roll) of formed film and experimental results]

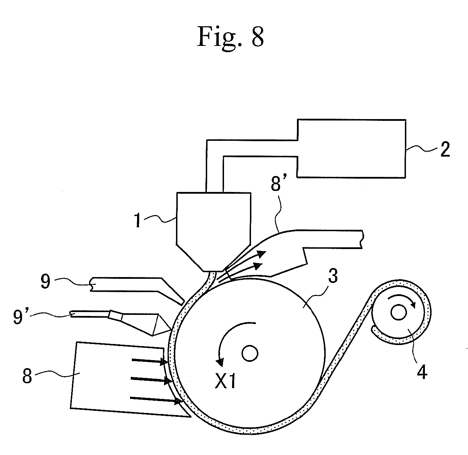

The present inventors produced films of Example and Comparative Example using the production apparatuses of the present invention of Fig. 7 and a conventional production apparatus of Fig. 8 and conducted an experiment to measure a thickness distribution in the width direction and a thickness distribution in the longitudinal direction (conveyance direction by the chill roll) of these films.

Firstly with reference to Fig. 8, the conventional production apparatus used in this experiment is described briefly. This production apparatus includes an air chamber 8 and a suction chamber 8' to prevent uneven chilling, and includes an air nozzle 9 and an edge pinning 9' to constrain film edges to prevent shrinkage of the film width on a chill roll 3.

On the other hand, the first channel, the second channel and the third channel of the production apparatus of the present invention are as follows. In the first channel, $L_1 = 25 \times 10^{-3}$ (m) and $a_1 = 0.3 \times 10^{-3}$ (m), in the second channel, $L_2 = 15 \times 10^{-3}$ (m) and $a_2 = 0.3 \times 10^{-3}$ (m), the radius of curvature in contact with the third channel is $r = 5 \times 10^{-3}$ (m), and in the third channel, $L_3 = 10 \times 10^{-3}$ (m) and $A_3 = 0.5 \times 10^{-3}$ (m). Herein, mechanical precision and installation precision of the fluid chamber are important for the numerical value $a_1$ of the first channel, and the gap can be easily set by providing rollers at the side plates so as to bring the rollers into contact with the surface of the chill roll. Further adjustment of the roller position and the roller diameter and the like enables adjustment of the channel cross-sectional width. The channel cross-sectional width can be set to any numerical value larger than that of the thickest part of the film. As for the fluid chamber, the width b=1.53 (m), pressure inside the chamber $p_c$=about 3000 (Pa) and rollers are provided at the side plates of the chamber.

In this experiment, isophthalic acid copolymerized polyethylene terephthalate (isophthalic aid 15 mol% (melt tension 5 (N/m) per unit width 1(m)) was used as a resin material. The extruder used was a twin screw extruder with $\phi$65mm, the die used was a single-layer coat hanger type T-die of 1,500 mm in width, and the chill roll used was of $\phi$600mm. The amount of molten resin extruded was 100 kg/hr, the extrusion temperature was 260°C, the chill roll temperature was 40°C and the take-up speed was 20 mpm (0.33 (m/s)).

Melt tension was measured using capillary rheometer (produced by Toyo Seiki Seisaku-sho, Ltd., CAPILOGRAPH 3A). The measured value of the melt tension per unit area was $6.4 \times 10^{-3}$ (N/mm$^2$), and the value per dice width of 1m was $0.64 \times 10^{-3}$ (N/mm$^2$) $\times$ 0.8 (mm) (dice exit gap (lip width))=$5 \times 10^{-3}$ (N/mm$^2$)= $5 \times 10^{-3} \times 1 \times 10^3$ (N/m) $\fallingdotseq 5$(N/m).

The conventional production apparatus of Fig. 8 had the same spatial length in the vertical direction between the die exit and the chill roll as that of Example. In Comparative Example, however, the molten resin extruded from the die was taken up in the rotational direction of the chill roll, and the actual air gap was about 30 mm. In order to prevent the film wobbling, the air chamber 8 and the suction chamber 8' were set at 50 Pa and -15 Pa, respectively, and the output from the edge pinning 9' was 12 kV and 0.15 mA.

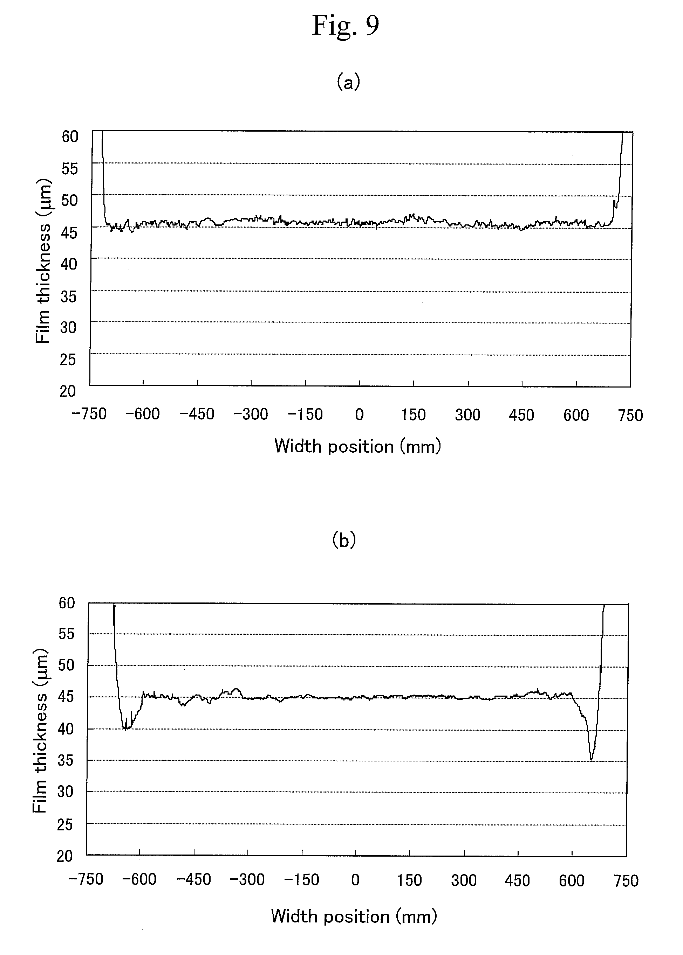

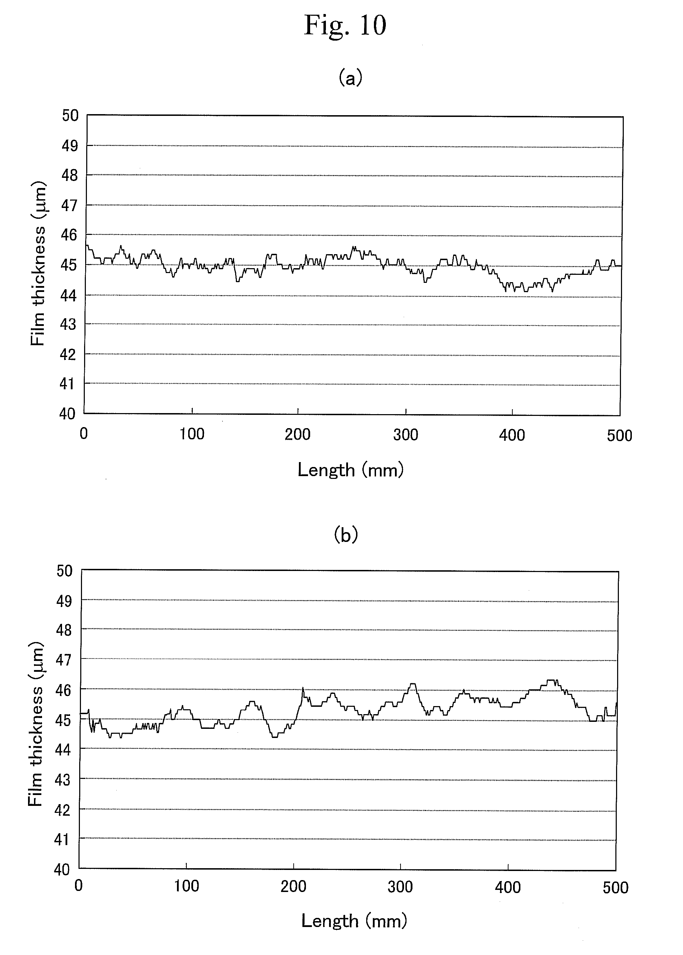

Fig. 9a and Fig. 9b show measurement results of thickness distributions in the width directions of the films of Example and Comparative Example, respectively, and Fig. 10a and Fig. 10b show measurement results of thickness distributions in the longitudinal directions of the films of Examples and Comparative Examples, respectively. As for thickness distribution data illustrated for Example and Comparative Example, the film formation rate was 20 mpm, and the thickness thereof was about 45 μm.

From Fig. 9b, the length of the flat part of the film as Comparative Example was about 1,200 mm, and so the production width obtained was near the value subtracted 300 mm from the width of the T-die. In this Comparative Example, since film edges were constrained, it was found that the film was thick at the outermost edges that undergo uniaxial elongational flow and was partially thinner at the boundary with the central film production part that undergoes planar elongational flow.

On the other hand, from Fig. 9a, the length of the flat part of the film as Example was about 1,400 m, and so the production width obtained was near the value subtracted 100 mm from the width of the T-die. Necking-in was slightly found at the outermost edges, but the molten resin extruded from the die showed planar elongational flow across almost the entire width, and the maximum product width was significantly wider than that of Comparative Example.

In this way, the production apparatus and the production method of the present invention can significantly increase the maximum product width of film produced using dies having the same width, and so the edge trimming margin can be reduced significantly. Then, such an effect can be made larger as the spatial length between the die exit and the chill roll becomes shortened. Further it can be considered that such an effect becomes larger because quick adhesion can be realized after the molten resin comes into contact with the chill roll.

Comparing Figs. 10a and b, a variation in thickness of the film was less in the film of Example than in the film of Comparative Example, and the film of Example showed a favorite result. From this, it was found that the air flow amount by the pressure air provided from the air chamber and going upward was narrowed so as not to generate film wobbling and the flow was controlled so as to be along this air flow.

A still shortened spatial length between the die exit and the chill roll makes the length of molten resin elongated without constraint shorter, and therefore a variation in thickness in the longitudinal direction can be made smaller.

These experimental results show that the film produced by the production apparatus and the production method of the present invention had excellent uniformity for the thickness and orientation of the film and in all respects of the appearance compared with that produced by the conventional production apparatus and such a production method. Further, they show excellent effect of suppressing build-up having a trade-off relationship with the suppression of the necking-in.

Although that is a detailed description of the embodiments of the present invention with reference to the drawings, the specific configuration is not limited to the above-stated embodiments, and it should be understood that we intend to cover by the present invention design modifications without departing from the spirits of the present invention.

**Claims**

1.  A film production apparatus configured to take up molten resin extruded downward from an exit bored at a lower end face of a die by a rotating chill roll located below the exit and to cool the molten resin for solidification by the chill roll to produce film, the film production apparatus further comprises:

    a fluid chamber that provides fluid to a space between the exit and the chill roll located below, the fluid chamber having a counter face facing the space and the chill roll,
    wherein
    the fluid provided from the fluid chamber flows through a fluid channel along the counter face toward the die while applying a fluid pressure in a direction pushing back the molten resin existing in the space against displacement of the molten resin taken up in a rotational direction of the chill roll.

2.  The film production apparatus according to claim 1, wherein
    the counter face includes a first region and a second region, the first region having a complementary shape of a rolled face of the chill roll, the second region being curved from the first region toward a side of the exit of the die to reach an upper end of the fluid chamber,
the fluid channel includes a first channel and a second channel, the first channel being between the first region and molten resin on the rolled face, the second channel being between the second region and molten resin residing in a space below the exit, and
the first channel contiguous to the second channel has a channel cross-sectional width that is narrower than an internal channel of the fluid chamber.

3. The film production apparatus according to claim 2, wherein
the upper end face of the fluid chamber defines a flat face,
the second region of the counter face has a radius of curvature increasing toward an intersection with the upper end face, and
molten resin extruded from the exit is extended in the space below and thereafter reaches the rolled face so as to be along the second region via the second channel while receiving the fluid pressure, and comes into close contact with the rolled face so as to be along the first region via the first channel.

4. The film production apparatus according to claim 3, wherein
the second region is orthogonal to the upper end face, and
molten resin extruded from the exit is extended vertically downward in the space and thereafter reaches the rolled face so as to be along the second region via the second channel while receiving the fluid pressure, and comes into close contact with the rolled face so as to be along the first region via the first channel.

5. The film production apparatus according to claim 4, wherein
the second region includes a curved part that is curved from the first region to a side of the exit of the die, and a linear part that is contiguous to the curved part and orthogonal to the upper end face.

6. The film production apparatus according to claim 3, wherein
the second region includes a curved part that is curved from the first region to a side of the exit of the die, and a linear part that is contiguous to the curved part and is inclined in a direction of expanding a channel cross-section of the second channel and of being away from the exit to intersect with the upper end face.

7. The film production apparatus according to any one of claims 1 to 6, wherein
the lower end face of the die facing the exit and the upper end face of the fluid chamber both define flat faces,
between the upper end face of the fluid chamber and the lower end face of the die, a fluid channel is further extended along the counter face to define a third channel, and
fluid flowing through the third channel is discharged in a downstream direction having a channel cross section larger than the third channel.

8. The film production apparatus according to claim 7, wherein a channel cross-sectional area of the third channel is adjusted so that fluid pressure in the third channel becomes larger than atmospheric pressure.

9. The film production apparatus according to any one of claims 1 to 8, wherein channel resistance of the first channel is 0.3 time or more of channel resistance of the second channel.

10. The film production apparatus according to any one of claims 1 to 9, wherein the fluid chamber is configured to provide fluid of at least two types of fluid pressure, and fluid pressure of fluid provided from an end region of the fluid chamber in a width direction is adjusted relatively higher than fluid pressure of fluid provided from an inside region thereof.

11. The film production apparatus according to any one of claims 2 to 10, wherein
the fluid chamber includes an internal channel and a tubular part surrounding the internal channel,
the internal channel communicates with an opening facing the counter face, and a part of an end face of the tubular part defines the second region of the counter face,
the tubular part at an end region in a width direction is provided with an opening facing a part of the end face of the tubular part and a separate channel communicating with the opening, and
fluid is provided from the internal channel of the fluid chamber and flows through the fluid channel, and fluid is further provided from the separate channel into the fluid channel.

12. The film production apparatus according to claim 11, wherein temperature of the fluid provided from the separate channel is higher than temperature of the fluid flowing through the fluid channel.

**13.** The film production apparatus according to any one of claims 1 to 12, wherein
the fluid chamber includes an internal channel and a tubular part surrounding the internal channel, and
the tubular part is provided with rollers at two side faces thereof in a width direction, and the rollers rotatably come into contact with the chill roll so as to secure a channel cross-sectional width of the first channel at least.

**14.** A method for producing film, comprising the steps of taking up molten resin extruded downward from an exit bored at a lower end face of a die by a rotating chill roll located below the exit and cooling the molten resin for solidification by the chill roll to produce film,
wherein
fluid is provided from a fluid chamber to a space between the exit and the chill roll located below, and the molten resin is taken up by the chill roll while flowing the fluid through a fluid channel along a counter face of the fluid chamber facing the space and the chill roll toward the die while applying a fluid pressure in a direction pushing back the molten resin existing in the space against displacement of the molten resin taken up in a rotational direction of the chill roll.

**15.** The method for producing film according to claim 14, wherein
the counter face includes a first region and a second region, the first region having a complementary shape of a rolled face of the chill roll, the second region being curved from the first region toward a side of the exit of the die to reach an upper end of the fluid chamber,
the fluid channel includes a first channel and a second channel, the first channel being between the first region and molten resin on the rolled face, the second channel being between the second region and molten resin residing in a space below the exit, and
the first channel contiguous to the second channel has a channel cross-sectional width that is narrower than an internal channel of the fluid chamber.

**16.** The method for producing film according to claim 15, wherein
the upper end face of the fluid chamber defines a flat face,
the second region of the counter face has a radius of curvature increasing toward an intersection with the upper end face, and
molten resin extruded from the exit is extended in the space below and thereafter is allowed to reach the rolled face so as to be along the second region via the second channel while giving the fluid pressure to the molten resin, and is allowed to come into close contact with the rolled face so as to be along the first region via the first channel.

**17.** The method for producing film according to claim 16, wherein
the second region is orthogonal to the upper end face, and
molten resin extruded from the exit is extended vertically downward in the space and thereafter is allowed to reach the rolled face so as to be along the second region via the second channel while giving the fluid pressure to the molten resin, and is allowed to come into close contact with the rolled face so as to be along the first region via the first channel.

**18.** The method for producing film according to claim 17, wherein
the second region includes a curved part that is curved from the first region to a side of the exit of the die, and a linear part that is contiguous to the curved part and orthogonal to the upper end face.

**19.** The method for producing film according to claim 16, wherein
the second region includes a curved part that is curved from the first region to a side of the exit of the die, and a linear part that is contiguous to the curved part and is inclined in a direction of expanding a channel cross-section of the second channel and of being away from the exit to intersect with the upper end face.

**20.** The method for producing film according to any one of claims 14 to 19, wherein
the lower end face of the die facing the exit and the upper end face of the fluid chamber both define flat faces,
between the upper end face of the fluid chamber and the lower end face of the die, a fluid channel is further extended along the counter face to define a third channel, and
fluid is allowed to flow through the third channel, following the second channel, and is discharged in a downstream direction having a channel cross section larger than the third channel.

21. The method for producing film according to claim 20, wherein a channel cross-sectional area of the third channel is adjusted so that fluid pressure in the third channel becomes larger than atmospheric pressure.

22. The method for producing film according to any one of claims 14 to 21, wherein channel resistance of the first channel is adjusted to be 0.3 time or more of channel resistance of the second channel.

23. The method for producing film according to any one of claims 14 to 22, wherein the fluid chamber is configured to provide fluid of at least two types of fluid pressure, and fluid pressure of fluid provided from an end region of the fluid chamber in a width direction is adjusted relatively higher than fluid pressure of fluid provided from an inside region thereof.

24. The method for producing film according to any one of claims 15 to 23, wherein
the fluid chamber includes an internal channel and a tubular part surrounding the internal channel,
the internal channel communicates with an opening facing the counter face, and a part of an end face of the tubular part defines the second region of the counter face,
the tubular part at an end region in a width direction is provided with an opening facing a part of the end face of the tubular part and a separate channel communicating with the opening, and
fluid is provided from the internal channel of the fluid chamber and flows through the fluid channel, and fluid is further provided from the separate channel into the fluid channel.

25. The method for producing film according to claim 24, wherein temperature of the fluid provided from the separate channel is higher than temperature of the fluid flowing through the fluid channel.

26. The method for producing film, according to any one of claims 14 to 25, wherein
the fluid chamber includes an internal channel and a tubular part surrounding the internal channel, and
the tubular part is provided with rollers at two side faces thereof in a width direction, and the rollers rotatably come into contact with the chill roll so as to secure a channel cross-sectional width of the first channel at least.

Fig. 1

# Fig. 2

## (a)

## (b)

# Fig. 3

## (a)

## (b)

## (c)

Fig. 4

# Fig. 5

## (a)

## (b)

# Fig. 6

(a)

(b)

Die exit width ≒ Film width

# Fig. 7

(a)

(b)

Fig. 8

# Fig. 9

(a)

(b)

# Fig. 10

## (a)

## (b)

# Fig. 11

## (a)

$t1 < t2$

## (b)

$t3 \gg t1$

| **INTERNATIONAL SEARCH REPORT** | International application No. |
|---|---|
| | PCT/JP2011/071116 |

**A. CLASSIFICATION OF SUBJECT MATTER**
*B29C47/88*(2006.01)i, *B29C47/14*(2006.01)i, *B29L7/00*(2006.01)n

According to International Patent Classification (IPC) or to both national classification and IPC

**B. FIELDS SEARCHED**

Minimum documentation searched (classification system followed by classification symbols)
B29C47/00-47/96

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 6-285953 A (Mitsubishi Heavy Industries, Ltd.),<br>11 October 1994 (11.10.1994),<br>paragraph [0014]; fig. 1, 2<br>(Family: none) | 1,2,9,14,15, 22<br>3-8,10-13, 16-21,23-26 |
| A | JP 2009-73079 A (Sumitomo Chemical Co., Ltd.),<br>09 April 2009 (09.04.2009),<br>entire text<br>(Family: none) | 1-26 |
| A | JP 60-36123 A (Placo Co., Ltd.),<br>25 February 1985 (25.02.1985),<br>entire text<br>(Family: none) | 1-26 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 November, 2011 (09.11.11) | 22 November, 2011 (22.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

**Patent documents cited in the description**

- JP 2006027133 A
- JP 11058498 A
- JP 4119706 B
- JP 2002178389 A
- JP 8258117 A
- JP 2000254958 A